# EUROPÄISCHE PATENTANMELDUNG

(11) **EP 2 680 202 A1**
(43) Veröffentlichungstag der Anmeldung: **01.01.2014**
(21) Anmeldenummer: 13166798.2
(22) Anmeldetag: 07.05.2013
(51) Int. Cl.: G06Q 20/16, G06Q 20/18, G06Q 20/20, G06Q 30/02

(54) **Verfahren zur Steuerung eines Verkaufsautomaten**

(30) Priorität: 30.05.2012 DE 102012104672
(71) Anmelder: MPR Werbefactory Marketing- Und Produktionsgesellschaft mbH, 73262 Reichenbach/Fils (DE)
(72) Erfinder: Mergemeier, Jörg, 21447 Handorf (DE)
(74) Vertreter: Fleck, Hermann-Josef

(57) **Zusammenfassung**

Die Erfindung betrifft ein Verfahren zur Steuerung eines Verkaufsautomaten, insbesondere eines Zigarettenautomaten, wobei der Verkaufsautomat eine Ausgabeeinheit zur Produktausgabe aufweist.

Eine komfortable und benutzeroptimierte Steuerung des Verkaufsautomaten wird dadurch möglich, dass mittels eines Mobilteils, insbesondere eines Mobiltelefons, über eine Datenfernübertragungsstrecke ein Datensatz, enthaltend einen codierten Kaufwunsch, an eine Recheneinheit übermittelt wird, und dass mittels der Recheneinheit ein Datensatz erzeugt und über eine Datenfernübertragungsstrecke versandt wird, um die Ausgabeeinheit mittelbar oder unmittelbar zur Produktausgabe zu veranlassen.

## Beschreibung

Die Erfindung betrifft ein Verfahren zur Steuerung eines Verkaufsautomaten, insbesondere eines Zigarettenautomaten, wobei der Verkaufsautomat eine Ausgabeeinheit zur Produktausgabe aufweist.

Verkaufsautomaten sind in vielfältigen Konfigurationen bekannt. Beispielsweise gibt es Verkaufsautomaten für Zigaretten, die in einem Speicherabteil mehrere verschiedene Zigarettensorten lagern. Der Zigarettenautomat weist Einwurfschlitze für Bargeld auf. Über eine Bedientastatur kann eine Zigarettenmarke ausgewählt werden. Nachdem die Zigarettenmarke ausgewählt ist, wird über eine Steuerschaltung die Ausgabeeinheit des Zigarettenautomaten aktiviert und die gewünschte Zigarettenmarke aus dem Lagerbereich ausgegeben.

Weiterhin sind bargeldlose Verkaufsautomaten bekannt. Hier muss ein Nutzer an einer separaten Kasse eine Bezahlkarte erwerben, die er in einen Aufnahmeschlitz des Zigarettenautomaten einstecken kann. Entweder kann an einer Bedientastatur eine Zigarettenmarke ausgewählt werden, oder es ist bereits auf der Bezahlkarte die entsprechend gewünschte Zigarettenmarke vorcodiert, sodass die Ausgabe automatisiert erfolgt. Vielen Konsumenten ist dieser Schritt des getrennten Erwerbs der Bezahlkarte zu kompliziert. Möchte er mehrere Zigarettenschachteln erwerben, so muss auch eine entsprechende Zahl an Bezahlkarten erstanden werden. Es hat sich gezeigt, dass der Konsument bevorzugt in dem Moment, in dem er bezahlt, auch seine Ware erhalten möchte.

In der jüngeren Vergangenheit ist eine zunehmend restriktive Haltung gegenüber dem Zigarettenmarkt erkennbar. Weltweit wird in den kommenden Jahren der Zigarettenverkauf eingeschränkt. Es sind Bestrebungen erkennbar, wonach nur noch minimalisierte Werbeaufmachungen auf Zigarettenpackungen oder Verkaufsautomaten zugelassen werden. Mithin besteht für die Zigarettenindustrie die Problematik der Individualisierung ihrer Produkte und der Abgrenzung gegenüber der Konkurrenz.

Es ist Aufgabe der Erfindung, ein Verfahren zur Steuerung eines Verkaufsautomaten, insbesondere eines Zigarettenautomaten, bereitzustellen, der auch bei minimalisierten Produktbewerbungsmöglichkeiten eine eindeutige und für den Benutzer komfortable Produktauswahl ermöglicht.

Diese Aufgabe wird dadurch gelöst, dass mittels eines Mobilteils, insbesondere eines Mobiltelefons, über eine Datenfernübertragungsstrecke ein Datensatz, enthaltend einen codierten Kaufwunsch, an eine Recheneinheit übermittelt wird. Ein Benutzer des Verkaufsautomaten kann mithin über sein Mobilteil, insbesondere Mobiltelefon, einen Verkaufswunsch absetzen. Der Datentransfer kann dabei beispielsweise die übliche Mobilfunkübertragungsfrequenz verwenden. Der Kaufwunsch wird zentral in einer Recheneinheit aufgenommen und ausgewertet. Die Recheneinheit generiert aus dem Kaufwunsch einen Datensatz, der über eine Datenübertragungsstrecke, beispielsweise ebenfalls eine Mobilfunkverbindung oder über das Internet versandt wird, um die Ausgabeeinheit mittelbar oder unmittelbar zur Produktausgabe zu veranlassen. Dabei kann vorteilhafterweise der Datensatz unmittelbar an den Verkaufsautomaten gesandt werden. Denkbar ist es jedoch auch, dass der Datensatz an das Mobilteil gesandt wird. Das Mobilteil wird dann bevollmächtigt, ein Auslösesignal an den Verkaufsautomaten zu senden. Dazu ist der Aufbau einer Datenverbindung zwischen dem Verkaufsautomaten und dem Mobilteil erforderlich. Nachdem dem Verkaufsautomat die Freigabe zur Produktausgabe signalisiert wurde, kann dieser eine Steuereinheit ansteuern, und die Produktausgabe veranlassen. Der Benutzer kann mithin unter Verwendung seines Mobilteils, insbesondere Mobiltelefons, eine einfache Steuerung des Verkaufsautomaten durchführen. Auf dem Mobilteil können Informationen, beispielweise via einer Update-Funktion aufgespielt werden, die ein oder mehrere Produkte des Verkaufsautomaten bewerben. Hierdurch wird die Markentreue des Konsumenten gestärkt.

Gemäß einer bevorzugten Ausgestaltungsvariante der Erfindung kann es vorgesehen sein, dass mittels des Mobilteils eine Kennung des Verkaufsautomaten aufgenommen und an die Recheneinheit übertragen wird. Diese Kennung individualisiert den Verkaufsautomaten und ermöglicht seine Ansteuerung durch die Recheneinheit.

Besonders bevorzugt ist die Kennung eine codierte Bilddarstellung, insbesondere eine optoelektronische Schrift, beispielsweise ein Barcode, ein Data Matrix Code oder dergleichen. Diese kann von einer Erfassungseinheit des Mobilteils ausgelesen werden. Beispielsweise kann die Erfassungseinheit eine Kamera sein, mit der die Kennung fotografiert wird. Das aufgenommene Bild kann in einer Auswertschaltung decodiert und daraus ein Datensatz zur Übermittlung beispielsweise an die Recheneinheit generiert werden.

Eine mögliche Erfindungsvariante ist dergestalt, dass mittels der Recheneinheit ein Abbuchungssignal an das Mobilteil über die Datenfernübertragungsstrecke versendet wird, dass in einer Speichereinheit des Mobilteils ein ein Geldguthaben codierender Datensatz gespeichert ist, und dass dieser Datensatz auf Veranlassung durch das Abbuchungssignal geändert wird. Auf diese Weise lässt sich einfach über die bidirektionale Verbindung zwischen der Recheneinheit und dem Mobilteil der Bezahlvorgang steuern. Der Benutzer kann sich auf einer Internetseite Guthaben in Form von sogenannten "Credits" herunterladen. Diese "Credits" werden in der Speichereinheit des Mobilteils codiert abgelegt. Der Erwerb der "Credits" wird abgesichert über übliche Bezahlsysteme, wie paypal, Mastercard, Visacard, EC-Banking, etc. Die Belastung der "Credits" erfolgt über die bidirektionale Verbindung, gesteuert von der Recheneinheit.

Eine denkbare Erfindungsalternative ist dergestalt, dass der Verkaufsautomat eine Erfassungseinheit aufweist, mittels der ein Lagerzustand des Verkaufsautomaten erfasst wird, und dass dieser Lagerzustand der Recheneinheit über die Datenfernübertragungsstrecke signalisiert wird, oder dass der Lagerzustand kontinuierlich unter Berücksichtigung der Verkaufsvorgänge aktualisiert wird. Mithin kann der Warenbestand des Verkaufsautoimaten und der Umsatzstandort genau vom Verkaufsautomaten an eine Zentrale, welche die Recheneinheit besitzt, gemeldet werden. Diese sogenannte "Watch-Dog-Funktion" ermöglicht dem Automatenaufsteller genaue Abverkaufszahlen einzusehen, und seinen Vertrieb gezielt zu steuern. Der Händler kann eine Umsatzbeteiligung beispielsweise vom Aufsteller des Automaten erhalten. Durch ein transparentes Monitoring kann der Händler Einblick in die tatsächlichen Verkaufszahlen des Automaten erhalten.

Weiterhin wird die Nachbefüllung des Verkaufsautomaten optimiert, denn ein Außendienstmitarbeiter kann den Befüllzustand des Verkaufsautomaten einsehen und dann gezielt die Befüllung vornehmen.

Eine weitere Vereinfachung der Bedienung des Verkaufsautomaten wird dadurch erreicht, dass auf einer Anzeigeeinheit des Mobilteils eine Auswahlliste mit Verkaufsprodukten des Verkaufsautomaten erzeugbar ist, dass aus der Auswalliste ein Verkaufsprodukt auswählbar ist, und dass bei Auswahl des Verkaufsprodukts mittelbar oder unmittelbar der den Kaufwunsch enthaltende Datensatz in einem Rechner des Mobilteils erzeugt wird.

Zusätzlich oder alternativ kann es auch vorgesehen sein, dass auf der Anzeigeeinheit des Verkaufsautomaten eine Bilddarstellung, beispielsweise in Form einer App, erzeugt wird Dieser Bilddarstellung ist ein bestimmtes Auswahlprodukt, nämlich das bevorzugte Konsumprodukt des jeweiligen Anwenders zugeordnet. Die Bilddarstellung ist auf dem Mobilteil auswählbar, beispielsweise durch eine Touch-Funktion oder durch eine Cursor-Steuerung. Bei Auswahl der Bilddarstellung wird mittelbar oder unmittelbar der den Kaufwunsch enthaltende Datensatz in einem Rechner des Mobilteils erzeugt. Dieser Datensatz kann dann an die Recheneinheit übermittelt werden. Über die Auswahlliste und die Bilddarstellung ist eine Bewerbung der Produkte des Verkaufsautomaten möglich. Dies trägt den zunehmend eingeschränkten Werbemöglichkeiten beim Zigarettenverkauf Rechnung.

Eine denkbare Erfindungsvariante ist dergestalt, dass die Recheneinheit über die Datenfernverbindung Dateninhalte an das Mobilteil übermittelt. Als Datenfernverbindung kann insbesondere eine Internetverbindung oder eine Mobilfunkverbindung genutzt werden. Bei Verwendung einer Mobilfunkverbindung ist in dem Verkaufsautomaten ein entsprechendes Mobilfunkmodul integriert. Der Verkaufsautomat kann mithin drahtlos angesteuert werden, wodurch sein Aufstellort unabhängig gewählt werden kann.

Eine denkbare Erfindungsvariante ist dergestalt, dass über eine Datenverbindung Dateninhalte zwischen dem Mobilteil und dem Verkaufsautomaten ausgetauscht werden können. Beispielsweise können Betriebszustände, Lagerzustände oder dergleichen zwischen dem Mobilteil und dem Verkaufsautomaten ausgetauscht werden. Denkbar ist es auch, dass die Ansteuerung des Verkaufsautomaten zur Produktausgabe nicht unmittelbar mit dem Verkaufsautomaten, sondern mittelbar über das Mobilteil erfolgt. Auch ist eine Rücksignalisierung von dem Verkaufsautomaten mittelbar an die Recheneinheit denkbar.

Die Erfindung wird im Folgenden anhand eines in den Zeichnungen dargestellten Ausführungsbeispieles näher erläutert. Es zeigen:
- Figur 1: in schematischer Darstellung eine Verkaufseinheit mit einem Verkaufsautomaten, einer Recheneinheit und einem Mobilteil; und
- Figur 2: in schematischer Darstellung einen Verkaufsautomaten.

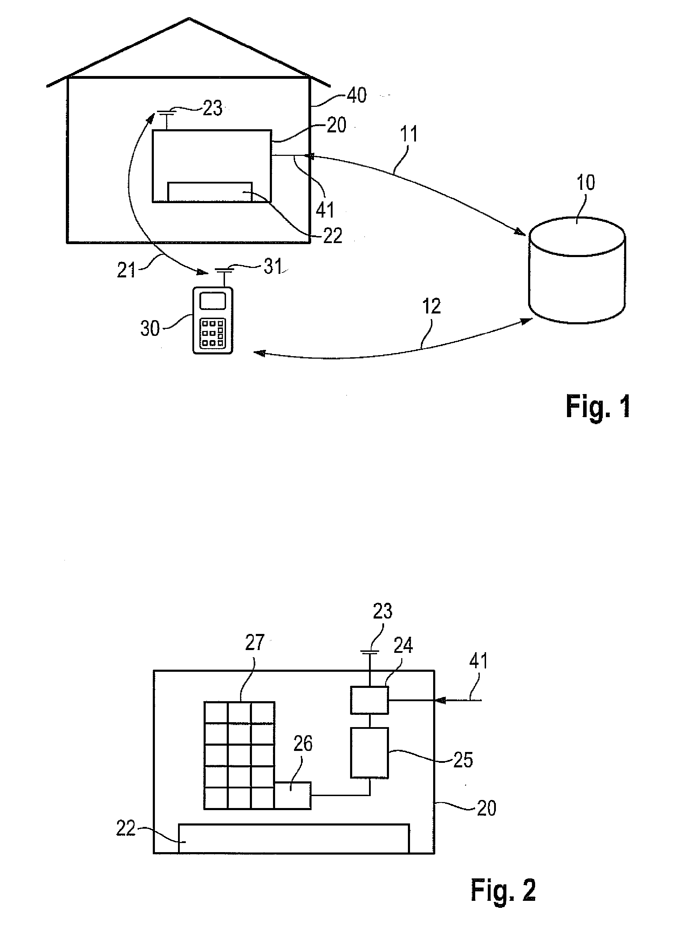

Figur 1 zeigt in schematischer Darstellung einen Verkaufsautomaten 20, der beispielsweise in einem Gebäude 40 aufgestellt ist. Der Verkaufsautomat 20 besitzt einen Internetanschluss und ist über eine Internetleitung 41 des Gebäudes 40 an eine Datenfernübertragungsstrecke 11 angeschlossen. Über diese Datenfernübertragungsstrecke 11 kann der Verkaufsautomat 20 in Datenverbindung mit einer Recheneinheit 10 gebracht werden. Der Verkaufsautomat 20 ist in Figur 2 näher gezeigt. Er besitzt eine Ausgabeeinheit 22, der ein Lager 27 zugeordnet ist. In dem Lager 27 sind die Verkaufsprodukte des Verkaufsautomaten 20 bevorratet. Wie Figur 2 weiter erkennen lässt, besitzt der Verkaufsautomat 20 eine Sende-/Empfangsschaltung 24, der die Internetleitung 41 zugeleitet ist. Weiterhin ist an die Sende-/Empfangsschaltung 24 eine Empfangseinrichtung, beispielsweise ein Mobilfunkmodem (zum Beispiel ein UMTS-Modem oder dergleichen), ein Bluetooth-Modem oder dergleichen mit einer Antenne 23 angeschlossen. Die Sende-/Empfangsschaltung 24 ist an einen Controller 25, insbesondere einen Micro-Controller, angeschlossen. Der Controller 25 wiederum steht mit einer Steuerschaltung 26 in Verbindung.

Figur 1 lässt weiter erkennen, dass über die Antenne 23 eine Datenverbindung 21 mit einem Mobilteil 30 herstellbar ist. Hierzu weist das Mobilteil 30 ebenfalls eine geeignete Sende-/Empfangsschaltung und eine damit gekoppelte Antenne 31 auf. Das Mobilteil 30 kann beispielsweise ein übliches Mobiltelefon, insbesondere ein Smartphone, sein. Das Mobilteil 30 kann insbesondere über die Antenne 31 in Verbindung mit der Recheneinheit 10 gebracht werden, wozu eine Datenfernübertragungsstrecke 12 genutzt wird. Als Datenfernübertragungsstrecke 12 kommt hier beispielsweise eine Mobilfunkverbindung in Betracht. Die Datenverbindung 21 zwischen dem Mobilteil 30 und dem Verkaufsautomaten 20 kann ebenfalls eine Mobilfunkverbindung sein. Denkbar ist es jedoch auch, dass eine Bluetooth-Verbindung oder dergleichen Funkverbindung genutzt wird. Weiterhin denkbar ist auch eine drahtgebundene lösbare Verbindung zwischen dem Mobilteil 30 und dem Verkaufsautomaten 20.

Im Folgenden wird die Funktionsweise des in den Zeichnungen gezeigten Verkaufssystems erläutert. Zunächst kann sich der Konsument über eine Internetseite, ähnlich "I-Tunes" eine sogenannte "App", also ein Bedienprogramm herunterladen. Anschließend kann er unter Verwendung dieser "App" sogenannte "Credits" erwerben. Diese "Credits" werden von der "App" auf dem Smartphone in einer Speichereinheit gespeichert. Der Einkauf dieser "Credits" wird abgesichert über übliche Bezahlsysteme, wie paypal, Mastercard, Visacard, EC-Banking, etc.. Denkbar ist es auch, dass ein Kunde im Fachhandel (beispielsweise Facheinzelhandel, Tankstelle, etc.) codierte Karten erwirbt. Durch Eingabe des Codes kann er sich "Credits" auf sein Mobilteil 30 laden.

Soll nun der Verkaufsautomat 20 von dem Mobilteil 30 angesteuert werden, so stellt der Benutzer durch Aktivierung der "App" auf seinem Mobilteil 30 eine Datenverbindung über die Datenfernübertragungsstrecke 12 mit der Recheneinheit 10 her. Anschließend wird von der "App", beispielsweise eine Auswahlliste auf der Anzeigeeinheit des Mobilteils 30 erzeugt. Diese Auswahlliste kann die Verkaufsprodukte des Verkaufsautomaten 20 enthalten. Denkbar ist es dabei, dass die Recheneinheit 10 hierzu Dateninformationen über die Datenfernübertragungsstrecke 12 an das Mobilteil 30 übermittelt, wobei die verfügbaren Verkaufsprodukte des Verkaufsautomaten 20 an das Mobilteil 30 übermittelt werden. Es kann jedoch auch vorgesehen sein, dass eine standardisierte Auswahlliste in der Programmstruktur der "App" hinterlegt ist, die den aktuellen Lagerzustand des Verkaufsautomaten 20 nicht berücksichtigt. Weiterhin ist es denkbar, dass der Benutzer mit der "App" bereits ein favorisiertes Verkaufsprodukt hinterlegt hat. Nach Auswahl des gewünschten Verkaufsproduktes auf dem Mobilteil 30 wird ein den Kaufwunsch enthaltendes Datensignal über die Datenfernübertragungsstrecke 12 an die Recheneinheit 10 geleitet. Die Recheneinheit 10 nimmt dieses Datensignal auf, wertet es aus und prüft, ob das gewünschte Produkt verfügbar ist. Hierzu kann entweder der aktuelle Zustand des Lagers 27 durch kontinuierliche Erfassung der Verkaufszahlen in der Recheneinheit 10 abgelegt sein. Damit kann eine unmittelbare Überprüfung in der Recheneinheit 10 stattfinden. Denkbar ist es jedoch auch, dass dem Lager 27 eine Erfassungseinheit zugeordnet ist, die den aktuellen Lagerzustand erfasst und diesen dann über den Controller 25 an die Sende-/Empfangsschaltung 24 weiterleitet. Auf Anfrage durch die Recheneinheit 10 wird dann der Lagerzustand bzw. die Verfügbarkeit des gewünschten Produktes an die Recheneinheit 10 übermittelt. Ist das gewünschte Produkt nicht verfügbar, so wird von der Recheneinheit 10 über die Datenfernübertragungsstrecke 12 dies dem Mobilteil 30 entsprechend signalisiert. Der Benutzer kann dann einen alternativen Produktwunsch absetzen.

Ist das gewünschte Produkt verfügbar, so wird von der Recheneinheit 10 eine Abbuchung des Guthabens ("Credits") auf dem Mobilteil 30 veranlasst. Hierzu wird ein entsprechendes Abbuchungssignal über die Datenfernübertragungsstrecke 12 an das Mobilteil 30 abgesetzt. Dieses Signal wird von einer Recheneinheit des Mobilteils 30 empfangen und ausgewertet und entsprechend dann eine Änderung des das Guthaben verschlüsselnden Datensatzes veranlasst. Das Mobilteil 30 kann dann ein Bestätigungssignal absetzen, das dann über die Datenfernübertragungsstrecke 12 an die Recheneinheit 10 übermittelt und die erfolgreiche Abbuchung hiermit signalisiert wird.

Die Recheneinheit 10 sendet nun ein Signal über die Datenfernübertragungsstrecke 11 an den Verkaufsautomaten 20. Dieses Auslösesignal wird in der Sende-/Empfangsschaltung 24 aufgenommen und an den Controller 25 weitergeleitet. Der Controller 25 steuert die Steuerschaltung 26 an. Von der Steuerschaltung 26 wird eine mechanische Auswurfeinheit aktiviert, die die Produktausgabe aus dem Lager 27 in die Ausgabeeinheit 22 veranlasst. Hierzu erhält die Steuerschaltung 26 vom Controller 25 eine Schachtanforderung, die der Auswurfeinheit weitergeleitet wird. Der Steuerschaltung 26 ist auch eine Überwachungsschaltung zugeordnet, welche die konkrete Produktausgabe überwacht, beispielsweise mit Endschaltern, um mögliche Fehlfunktionen zu detektieren. Tritt eine solche Fehlfunktion auf, kann diese an die Recheneinheit 10 zum Auslösen einer Korrekturprozedur rückgemeldet werden.

Die Datenverbindung zwischen der Recheneinheit 10 und dem Mobilteil 30 ist bidirektional aufgebaut, sodass von der Recheneinheit 10 auch Werbeinhalte auf das Mobilteil 30 aufgespielt werden können.

Über die Datenverbindung 21 zwischen dem Mobilteil 30 und dem Verkaufsautomaten 20 kann auch eine unmittelbare Kommunikation des Benutzers mit dem Verkaufsautomaten 20 stattfinden. Beispielsweise kann sich der Benutzer den aktuellen Lagerzustand des Verkaufsautomaten 20 über die Datenverbindung 21 signalisieren lassen.

## Patentansprüche

1. Verfahren zur Steuerung eines Verkaufsautomaten (20), insbesondere eines Zigarettenautomaten, wobei der Verkaufsautomat (20) eine Ausgabeeinheit (22) zur Produktausgabe aufweist,
**dadurch gekennzeichnet,**
**dass** mittels eines Mobilteils (30), insbesondere eines Mobiltelefons, über eine Datenfernübertragungsstrecke (12) ein Datensatz, enthaltend einen codierten Kaufwunsch, an eine Recheneinheit (10) übermittelt wird, und
**dass** mittels der Recheneinheit (10) ein Datensatz erzeugt und über eine Datenfernübertragungsstrecke (12) versandt wird, um die Ausgabeeinheit (22) mittelbar oder unmittelbar zur Produktausgabe zu veranlassen.

2. Verfahren nach Anspruch 1,
**dadurch gekennzeichnet,**
**dass** mittels des Mobilteils (30) eine Kennung des Verkaufsautomaten (20) aufgenommen und an die Recheneinheit (10) übertragen wird.

3. Verfahren nach Anspruch 2,
**dadurch gekennzeichnet,**
**dass** die Kennung eine codierte Bilddarstellung, insbesondere eine optoelektronische Schrift, beispielsweise ein Barcode, ein Data Matrix Code oder dergleichen, ist, die von einer Erfassungseinheit des Mobilteil (30) ausgelesen wird.

4. Verfahren nach einem der Ansprüche 1 bis 3,
**dadurch gekennzeichnet,**
**dass** mittels der Recheneinheit (10) ein Abbuchungssignal an das Mobilteil (30) über die Datenfernübertragungsstrecke (12) versendet wird,
**dass** in einer Speichereinheit des Mobilteils (30) ein ein Geldguthaben codierender Datensatz gespeichert ist, und
**dass** dieser Datensatz auf Veranlassung durch das Abbuchungssignal geändert wird.

5. Verfahren nach einem der Ansprüche 1 bis 4,
**dadurch gekennzeichnet,**
**dass** der Verkaufsautomat (20) eine Erfassungseinheit aufweist, mittels der ein Lagerzustand des Verkaufsautomaten (20) erfasst wird, und dass dieser Lagerzustand der Recheneinheit (10) über die Datenfernübertragungsstrecke (11) signalisiert wird, oder
**dass** der Lagerzustand kontinuierlich unter Berücksichtigung der Verkaufsvorgänge aktualisiert wird.

6. Verfahren nach einem der Ansprüche 1 bis 5,
**dadurch gekennzeichnet,**
**dass** auf einer Anzeigeeinheit des Mobilteil (30) eine Auswahlliste mit Verkaufsprodukten des Verkaufsautomaten (20) erzeugbar ist,
**dass** aus der Auswalliste ein Verkaufsprodukt auswählbar ist, und dass bei Auswahl des Verkaufsprodukts mittelbar oder unmittelbar der den Kaufwunsch enthaltende Datensatz in einem Rechner des Mobilteils (30) erzeugt wird.

7. Verfahren nach einem der Ansprüche 1 bis 6,
**dadurch gekennzeichnet,**
**dass** auf der Anzeigeeinheit des Verkaufsautomaten (20) eine Bilddarstellung, der ein bestimmtes Auswahlprodukt zugeordnet ist, erzeugt wird, und
**dass** diese Bilddarstellung auswählbar ist, und
**dass** bei Auswahl der Bilddarstellung mittelbar oder unmittelbar der den Kaufwunsch enthaltende Datensatz in einem Rechner des Mobilteils (30) erzeugt wird.

8. Verfahren nach einem der Ansprüche 1 bis 7,
**dadurch gekennzeichnet,**
**dass** die Recheneinheit (10) über die Datenfernverbindung (12) Dateninhalte an das Mobilteil (30) übermittelt.

9. Verfahren nach einem der Ansprüche 1 bis 8,
**dadurch gekennzeichnet,**
**dass** über eine Datenverbindung (21) Dateninhalte zwischen dem Mobilteil (30) und dem Verkaufsautomaten (20) ausgetauscht werden.

10. Verkaufsautomat (20) zur Durchführung des Verfahrens nach einem der Ansprüche 1 bis 9.
